Europäisches Patentamt

European Patent Office

Office européen des brevets

(11) Veröffentlichungsnummer : **0 119 427**
**B1**

# (12) EUROPÄISCHE PATENTSCHRIFT

(45) Veröffentlichungstag der Patentschrift :
**20.01.88**

(21) Anmeldenummer : **84101204.0**

(22) Anmeldetag : **07.02.84**

(51) Int. Cl.⁴ : **C 09 D   3/393, C 08 L 23/08,
C 08 L 29/04, C 08 L 33/06**

(54) **Beschichtungspulver auf der Basis von verseiften Ethylen-Vinylacetat-copolymeren und deren Verwendung.**

(30) Priorität : **17.02.83 DE 3305353**

(43) Veröffentlichungstag der Anmeldung :
**26.09.84 Patentblatt 84/39**

(45) Bekanntmachung des Hinweises auf die Patenterteilung : **20.01.88 Patentblatt 88/03**

(84) Benannte Vertragsstaaten :
**AT BE CH DE FR GB IT LI NL SE**

(56) Entgegenhaltungen :
**EP-A- 0 030 594**
**FR-A- 2 262 074**
**GB-A- 1 212 113**

(73) Patentinhaber : **BAYER AG**
**Konzernverwaltung RP Patentabteilung**
**D-5090 Leverkusen 1 Bayerwerk (DE)**

(72) Erfinder : **Resz, Raoul, Dr.**
**Buchenkampsweg 10**
**D-5060 Bergisch Gladbach 1 (DE)**
Erfinder : **Alberts, Heinrich, Dr.**
**Schulstrasse 1a**
**D-5068 Odenthal-Blecher (DE)**
Erfinder : **Burgdörfer, Hans-Heribert, Dr.**
**Goffineweg 49**
**D-5000 Köln 80 (DE)**
Erfinder : **El Sayed, Aziz, Dr.**
**Saarlauterner Strasse 39**
**D-5090 Leverkusen (DE)**

## Beschreibung

Die Erfindung betrifft die Herstellung und Verwendung von Beschichtungspulvern auf Basis von verseiften Ethylen-Vinylacetat-Copolymeren (EVA-Copolymeren), die mit Polyalkyl(meth) acrylaten modifiziert sind. Überzüge und Beschichtungen, hergestellt aus diesen Beschichtungspulvern, zeichnen sich durch ihre Flexibilität und Elastizität, besonders bei tiefen Temperaturen, aus.

Aus der DE-PS 1 669 151 ist bekannt, daß 80 bis 100 % verseifte Ethylen-Vinylacetat-Copolymere mit einem Molverhältnis von 2 : 1 bis 20 : 1 als Beschichtungsmaterial für Metall, Keramik, Glas oder Holz nach den verschiedenen Techniken der Pulverbeschichtungsverfahren (z. B. nach dem Wirbelsinterverfahren, nach dem Flammspritzverfahren oder nach dem elektrostatischen Pulverbeschichtungsverfahren) verwendet werden können. Je nach der Art des Beschichtungsverfahrens benötigt man Pulver, die hinsichtlich ihrer Korngröße und Kornbeschaffenheit den jeweiligen speziellen Anforderungen gerecht werden. So erfordert z. B. der Einsatz nach dem Wirbelsinterverfahren ein Kunststoffpulver, dessen Korngröße überwiegend zwischen 50 und 250 μm Durchmesser liegt.

Für das elektrostatische Pulverbeschichtungsverfahren werden im allgemeinen Pulver verwendet, dessen Korngröße im wesentlichen unter 100 μm Durchmesser liegt.

Die Eigenschaften der obengenannten Beschichtungspulver sind für eine Reihe von Anwendungen zufriedenstellend. Jedoch neigen die aus diesen Pulvern beim Auftragen im Wirbelsinterverfahren auf massive Gegenstände mit hoher Wärmekapazität erhaltenen Beschichtungen dazu, daß sie an Stellen, die durch thermische Ausdehnung und Kontraktion stark beansprucht sind, z. B. an Innenkanten bei Temperaturen unterhalb 0 °C häufig Risse bilden. Trotz guter Haftung der Beschichtung können an diesen Stellen korrosive Substanzen eindringen und von dort ausgehend Korrosion verursachen.

Daher ist es erwünscht, Beschichtungsmaterialien einzusetzen, die auch bei tiefen Temperaturen elastisch und dehnbar sind und den bis jetzt bekannten verseiften Ethylen-Vinylacetat-Copolymeren überlegen sind.

Ein etwas verbessertes Tieftemperaturverhalten ist in einem gewissen Umfang dadurch zu erreichen, daß die Ethylen-Vinylacetat-Copolymeren nur teilverseift werden. Aus technischen Gründen ist jedoch die Herstellung derartiger Materialien mit erheblichen wirtschaftlichen Nachteilen verbunden. Beispielsweise ist die Zerkleinerung derartiger EVA-Copolymeren wegen ihrer elastischen Beschaffenheit erheblich erschwert. Weiterhin ist gerade bei der Teilverseifung eine Verringerung der guten Lösungsmittelbeständigkeit der hoch verseiften Produkte festgestellt worden.

Die obengenannten verseiften Ethylen-Vinylacetat-Copolymeren neigen ferner bei der Herstellung von dünnen Beschichtungen im Bereich von ca. 60 bis 150 μm dazu, eine unebene, mit Kratern übersäte Oberfläche zu bilden. Dieser Effekt tritt insbesondere bei der Anwendung des Pulvers nach dem Elektrostatischen-Pulver-Sinter-Verfahren (EPS-Verfahren) auf.

Daher sind derartige Beschichtungen weder in optischer Hinsicht befriedigend, noch gewährleisten sie einen ausreichenden Schutz des Untergrundes gegen Korrosion. Auch beim Auftragen der Beschichtungen nach dem Wirbelsinterverfahren auf Metall kann die Oberflächenbeschaffenheit der erhaltenen Beschichtungen hinsichtlich ihrer Glätte und ihres Glanzes unbefriedigend sein.

Es besteht daher neben dem wirtschaftlichen Interesse auch in Hinblick auf die Beschichtungsqualität ein Bedürfnis, die Eigenschaften von verseiften Ethylen-Vinylacetat-Copolymeren so zu modifizieren, daß dadurch neue Anwendungsgebiete erschlossen werden.

Diese angestrebte Verbesserung der Produktqualität kann in wirtschaftlicher Weise dadurch erfolgen, daß Polyalkyl(meth) acrylatharze als Additive zu verseiften Ethylen-Vinylacetatcopolymeren hinzugesetzt werden.

Aus der DE-OS 1 918 893 und aus der US-PS 3 809 667 ist bekannt, daß durch Zusatz von geringen Mengen von Polymerisaten eines Alkylacrylates beispielsweise zu einem vinylaromatischen, thermoplastischen Harz dessen Verarbeitungs- und Gleiteigenschaften verbessert werden können.

Ein derartiges Produkt wird unter dem Handelsnamen Modaflow® von der Monsanto Co. als Modifizierungs- und Verlaufsmittel für Harze und Lacke, insbesondere für Alkydharze und Epoxyharze, angeboten.

Aus der DE-OS 2 507 411 ist weiterhin bekannt, daß flüssige Alkylacrylat-Copolymerisate auch als Verlaufsmittel in Pulverbeschichtungsformulierungen eingesetzt werden können.

Polymerisate denen diese zugesetzt werden können, sind z. B. hitzehärtende und thermoplastische Polymere wie Polyamide, Polyurethane, Epoxyharze, Polyesterharze, Acrylatharze, Polyolefine und ihre Copolymeren mit ethylenisch ungesättigten Monomeren, Polystyrol, Celluloseester, Polycarbonate, Phenol-Aldehyd-Harze.

Es wurde nun gefunden, daß der Zusatz geringer Mengen von Polyalkyl(meth) acrylaten zu verseiften Ethylen-Vinylacetat-Copolymeren, welche Ethylen und Vinylacetat in Molverhältnissen von 2 : 1 bis 20 : 1 enthalten und bis zu einem Hydrolysegrad von 80 bis 100 % verseift sind, nicht nur die Verlaufseigenschaften der daraus hergestellten Beschichtungspulver verbessert, sondern auch eine Reihe von sonstigen für die Beschichtungstechnik wichtigen Eigenschaften wie z. B. Bruchfestigkeit und Rißbildungsneigung bei niedrigen Temperaturen, die Flexibilität und die Elastizität. Die Verbesserung dieser Eigenschaften ist für den Gebrauchswert der Beschichtungsmaterialien von großer Bedeutung, weil dadurch für sie Anwendungsgebiete erschlossen werden können, welche für sie bisher wegen ihrer ungünstigen Verhaltens bei tiefen Temperaturen kaum möglich waren.

Gegenstand der Erfindung sind daher Polymermischungen, bestehend aus

1) 99,95-80 Gew.-% verseiften Ethylen-Vinylacetat-Copolymeren in einem Molverhältnis von 2 : 1 bis 20 : 1 und einem Hydrolysegrad von 80 bis 100 % und

2) 20-0,05 Gew.-% (Meth) Acrylsäurealkylesterhomo- und Copolymerisate mit $C_1$-$C_{24}$-Alkylresten in der Esterkomponente,

wobei die Summe der Komponenten 1) und 2) 100 Gew.-% beträgt.

Weiterhin ist Gegenstand der Erfindung die Verwendung von mit überwiegend Poly(meth) acrylathomo- und copolymeren der obengenannten Zusammensetzung modifizierten verseiften Ethylen-Vinylacetatcopolymeren als Beschichtungspulver.

Erfindungsgemäß verwendbare Polyalkyl(meth) acrylate sind solche, deren Alkylrest linear oder verzweigt ist und 1 bis 24, vorzugsweise 4 bis 10 C-Atome enthält. Sie können sowohl Homopolymerisate als auch Copolymerisate von verschiedenen (Meth)-Acrylaten sein. Copolymerisate können durch Polymerisation von Gemischen von Alkyl(meth) acrylaten hergestellt werden, wobei diese Gemische aus 2 bis 20 verschiedenen Alkyl(meth) acrylaten bestehen können.

Bei Temperaturen von ca. 20°-150 °C sind die Polyalkyl(meth) acrylate flüssig bis zähflüssig. Ihre Molekulargewichte liegen von 2 000 bis 100 000, vorzugsweise von 3 000 bis 50 000. Die Bestimmung des Molekulargewichtes erfolgt bis ca. 20 000 zweckmäßigerweise dampfdruckosmometrisch, bei höheren Molekulargewichten osmometrisch.

Es werden bevorzugt Copolymerisate aus Alkyl(Meth) acrylaten eingesetzt, die 5 bis 95 Gew.-% Alkyl(Meth) acrylate mit 2 bis 5 C-Atomen in der Alkyl-Gruppe und 95 bis 5 Gew.-% Alkyl(Meth) acrylate mit 6 bis 24 C-Atomen einpolymerisiert enthalten. Besonders bevorzugt werden solche Copolymerisate, welche ein Alkyl(meth) acrylat-Monomeres mit 2 bis 5 C-Atomen in den Alkyl-Gruppen der einen Monomeren und 6 bis 12 C-Atome in der Alkylgruppe des anderen Monomeren, enthalten.

Erfindungsgemäß verwendbare Monomere sind z. B. Methylacrylat, Ethylacrylat, n-Propylacrylat, Isobutylacrylate, n-Butylacrylat, tert.-Butylacrylat, Pentylacrylat, Isopentylacrylat, Hexylacrylat, 2-Ethylhexylacrylat, Decylcrylat, Dodecylacrylat, Tetradecylacrylat, Octadecylacrylat, Eicosylacrylat und die entsprechenden Methacrylate, ferner (Meth) Acrylsäurealkylester mit Hydroxylgruppen enthaltenden Alkylresten wie β-Hydroxyethyl(meth) acrylat und β-Hydroxypropyl(meth) acrylat. Desweiteren können bis zu 30 Gew.-% der Alkyl(meth)-acrylatkomponente durch andere Vinylmonomere ersetzt sein.

Erfindungsgemäß verwendbare Ethylen/Vinylacetat-Copolymerisate enthalten vor der Verseifung Ethylen und Vinylacetat in einem Molverhältnis von 2 : 1 bis 20 : 1. Sie wurden zu einem Hydrolysegrad von 80 bis 100 % verseift.

Vorzugsweise enthalten die Ethylen-Vinylacetat/Copolymerisate vor der Verseifung Ethylen- und Vinylacetat in einem Molverhältnis von 10 : 1 bis 4 : 1. Der Verseifungsgrad/Hydrolysengrad beträgt vorzugsweise 90-100 %.

Die Herstellung der erfindungsgemäß verwendbaren Ethylen/Vinylacetat-Copolymerisate kann nach bekannten Methoden in Gegenwart von radikalisch wirkenden Polymerisationsinitiatoren bei Drucken von 100 bis 4 000 bar und Temperaturen von 30 bis 250 °C erfolgen. Ihr durchschnittliches Molekulargewicht kann in weiten Bereich schwanken. Bevorzugt werden Copolymerisate mit einem durchschnitt- lichen Molekulargewicht von 10 000 bis 50 000 verwendet. Sie besitzen Schmelzindices (gemessen nach DIN 53735 bei 190 °C bei einer Belastung von 30,2 g/mm²) von 0,5 bis 200 g/10 Min. vorzugsweise von 5 bis 100 g/10 Min).

Die Verseifung der Ethylen/Vinylacetat-Copolymerisate kann nach bekannten Methoden erfolgen.

Die Zusammensetzung der verseiften Ethylen/Vinylacetat-Copolymerisate ist für ihre Eignung als Beschichtungspulver von Bedeutung. Da in der Praxis eine hohe Härte, ein hoher Schmelzpunkt und eine gute Lösungsmittelbeständigkeit vorteilhaft sind, werden vorzugsweise 90 bis 100 % verseifte Ethylen/ Vinylacetat-Copolymisate verwendet.

Erfindungsgemäß gut geeignet sind verseifte Ethylen/Vinylacetat-Copolymerisate, die vor der Verseifung Ethylen und Vinylacetat in einem Molverhältnis von 10 : 1 bis 4 : 1 enthalten. Diese verseiften Ethylen/Vinylacetat-Copolymerisate enthalten ca. 13 bis 30 Gew.-% einpolymerisierten Vinylalkohol.

Sie weisen eine gute Licht-, Luft- und Wetterbeständigkeit auf. Um diese Eigenschaften zu verbessern, können geeignete Stabilisatoren zugemischt werden. Als Stabilisatoren, z. B. gegen UV-Licht sind z. B. substituierte Crotonsäureester, Benzophenonderivate und Benzotriazole geeignet (z. B. DE- OS 1 087 902, belgisches Patent 625 007 und GB-PS 878 362).

Die Eigenschaften der erfindungsgemäßen Polymermischungen bleiben im allgemeinen durch den Ersatz von bis zu 30 Gew.-% der (Meth) Acrylsäureesterkomponente durch andere Vinylmonomere erhalten.

Zusätze, z. B. Füllstoffe, Weichmacher, Farbstoffe und Pigmente können dem Beschichtungspulver in üblichen Mischgeräten zugesetzt werden. Die Menge der zugesetzten Pigmente beträgt üblicherweise 0,5-30 Gew.-%. Geeignete Pigmente sind z. B. Titandioxid, Chromoxidgrün, Ultramarin, Cadmiumrot bzw. -gelb, Russ u. a. Metalleffekte lassen sich durch Zugabe von Aluminium bzw. Bronzepulver erzielen. Durch Aufschäumung der Schicht durch organische Treibmittel (z. B. Azodicarbonamid, Diphenylsulfon- 3,3'-disulfohydrazid) kann man leichte und stoßfeste Beschichtungen aufbringen.

3

**0 119 427**

Nach dem in folgenden beschriebenen Beschichtungsverfahren werden vorzugsweise aus Metallen gefertige Werkstücke mit einem Überzug versehen. Es können aber auch Gegenstände aus Keramik, Glas, Holz oder Kunststoff beschichtet werden, sofern diese der zum Aufschmelzen des Kunstharzpulvers erforderlichen thermischen Beanspruchung standhalten. Die Oberfläche der zu beschichtenden Gegenstände wird zweckmäßigerweise vor der Beschichtung durch Reinigen mit Lösungsmitteln oder mechanisch von Fetten, Ölen oder sonstigen Verunreinigungen (z. B. Oxidschichten) befreit.

Um die Haftfestigkeit der Kunstharzschicht auf der Unterlage zu verbessern, kann diese beispielsweise durch Sandstrahlen, Bürsten oder Ätzen aufgerauht werden. Die Haftfestigkeit der erfindungsgemäßen Copolymerisate macht eine derartige Vorbehandlung nicht immer erforderlich.

Die erfindungsgemäßen Beschichtungen zeigen gute Beständigkeit gegenüber zahlreichen organischen Lösungsmitteln.

Die Korngröße des erfindungsgemäßen Beschichtungspulvers beträgt 40 bis 300 μ (Durchmesser), für Verwendung in Wirbelsinterverfahren vorzugsweise 50 bis 250 μ (Durchmesser), für Verwendung zum Flammspritzverfahren vorzugsweise 80 bis 200 μ (Durchmesser) und für das elektrostatische Beschichtungsverfahren vorzugsweise 10 bis 120 μ (Durchmesser). Die Polymerisatpulver werden auf übliche Weise, z. B. durch Mahlen in einer Prallteller-Mühle und anschließendes Sieben oder durch eine geeignete Fällungsmethode aus einer Lösung hergestellt. Weiterhin können die Pulver nach dem Verfahren der Be-PS 702 062 erhalten werden.

Beschichtungspulver im Sinne der Erfindung enthalten neben den verseiften EVA-Copolymeren 0,05 bis 20 Gew.-%, vorzugsweise 0,1 bis 5 Gew.-% Alkyl(Meth) Acrylathomo- und Copolymerisate.

Das Zumischen des Polyacrylates zum verseiften Ethylen-Vinylacetat-Copolymeren kann nach bekannten Methoden wie z. B. in DE-OS 2·611 548 beschrieben, erfolgen. Eine weitere Methode der Zumischung ist beispielsweise die Nachbehandlung eines bereits ausgefällten, zerkleinerten, porösen verseiften Ethylen-Vinylacetat-Copolymeren in wäßriger Suspension mit einer Lösung des Polyalkylacrylates in einem mit Wasser nicht mischbaren Lösungsmittel (z. B. Toluol, Petrolether, Waschbenzin, Cyclohexan, n-Heptan, Ethylacetat, Chlorkohlenwasserstoffe wie Chloroform, Methylenchlorid, Trichlorethylen u. a.).

Ein einfaches Verfahren besteht z. B. darin, die erfindungsgemäß verwendeten (Meth) acrylatadditive bereits in die Umesterungsreaktion neben dem EVA-Copolymer mit vorzulegen und anschließend wie üblich aufzuarbeiten.

Weiterhin können die erfindungsgemäß eingesetzten verseiften Ethylen-Vinylacetat-Copolymere in einem Kneter oder in einem Extruder mit den Poly(Meth) acrylaten vermischt werden.

Die erfindungsgemäß verwendbaren Beschichtungspulver können aus den erhaltenen Granulaten durch Mahlung hergestellt werden.

Die aus den erfindungsgemäßen Beschichtungspulvern hergestellten Überzüge dienen als Korrosionsschutz bzw. als Schutz gegen mechanischen Verschließ für Gegenstände aus Metallen, z. B. aus Stahl, Stahlguß, Kupfer, Messing, Bronze, Rotguß, Aluminium und dessen Legierungen, aus Porzellan, Keramik, Kunststoff und aus Holzarten. Sie können als elektrisch isolierende Überzüge in der Elektrotechnik z. B. für Leuchten, Schalter, Motorenteile u. a. verwendet werden. Andere Anwendungsbeispiele sind z. B. Haushaltsgeräte, Kühlschrankroste, Kleiderablagen, Handtuchhalter, Ladeneinrichtungen, Verkaufsstände, Dekorationsgegenstände, Bedienungs- und Flaschenkörbe, Außen- und Innenbeschichten von Rohren und Behältern.

Die erfindungsgemäßen Überzüge zeichnen sich weiterhin durch ihre guten Eigenschaften, besonders bei tiefen Temperaturen, aus.

Beispiel 1

10 000 g eines Ethylen-Vinylacetat-Copolymeren mit einem Gehalt von 34,4 Gew.-% einpolymerisiertem Vinylacetat (nach DIN 53735 bei 190 °C und 2,16 kg Belastung gemessener Schmelzindex von 84 g/10 Min.) werden in einem 40 Liter Edelstahl-Rührkessel in 17 000 g Toluol gelöst. Zur Entfernen der in geringen Mengen stets vorhandenen Feuchtigkeit durch azeotrope Destillation werden 5 000 ml Lösungsmittel abdestilliert. Die entstandene klare Lösung wird dann auf ca. 55 °C abgekühlt und zunächst 5 044 g Methanol, dann eine Lösung von 200 g Natriummethylat in 640 g Methanol gelöst zugegeben.

Nachdem das Gemisch eine Stunde am Rückfluß gekocht worden war, wird über eine Füllkörperkolonne mit einer Geschwindigkeit von ca. 1 200 ml/St. ein auf 7 600 ml belaufendes Gemisch aus Methylacetat-Methanol-Toluol abdestilliert. Es werden dann 222 g 100 %ige Essigsäure zugefügt und bei 60 °C Innentemperatur, 42 g eines Alkylacrylat-Copolymeren, welches 30 Gew.-% einpolymerisiertes Ethylacrylat und 70 Gew.% 2-Ethyl-hexylacrylat enthält (dampfdruckosmometrisch gemessenes Molekulargewicht 6 000) sowie 2 520 g eines Titandioxid-Weißpigmentes unter Rühren eingetragen. Das Gemisch wird dann bei 60 °C homogenisiert. Die organischen Lösungsmittel werden unter Rühren durch Wasserdampfdestillation bei vermindertem Druck abdestilliert. Das entstandene ca. 500 bis 2 000 μm Durchmesser aufweisende, poröse Granulat wird abfiltriert, mit Wasser gewaschen und getrocknet. Das getrocknete Material wird dann auf eine Kornfeinheit von kleiner als 250 μm gemahlen. 100 Gew.-% Beschichtungspulver liefert bei Verbrennung 22,6 Gew.-% Verbrennungsasche, welche überwiegend aus

4

Titandioxid besteht. Aus der Verseifungszahl berechnet sich ein Gehalt des Polymeren von 2,4 Gew.-% einpolymerisiertem Vinylacetat. Der nach DIN 53735 bei 150 °C und 2,16 kg Belastung gemessene Schmelzindex beträgt 5,53 g/10 Min. Die Kältebruchtemperatur wird nach DIN 53372 zu — 32 °C bestimmt.

## Beispiel 2 bis 5

2 500 g eines nach der im Beispiel 1 beschriebenen Methode, aber ohne Zusatz eines Modifikators und von Titandioxid-Pigment hergestellten und isolierten, verseiften Ethylen-Vinylacetat-Copolymeren mit einem Gehalt von 2,43 Gew.-% einpolymerisierten Vinylacetat, 18,64 Gew.-% Vinylalkohol und 78,93 Gew.-% Ethylen (nach DIN 53735 bei 150 °C und 2,16 kg Belastung gemessene Schmelzindex von 7,14 g/10 Min.), werden in einem 10 Liter fassenden Edelstahl-Rührgefäß unter Kochen am Rückfluß in einem Gemisch aus 3 514 g Toluol und 929 g Methanol gelöst. Es wird dann die in der Tabelle 1 angegebene Menge eines Modifikators der dort angegebenen Zusammensetzung in 200 g Toluol gelöst zugefügt und homogen verrührt. Die Isolierung des Polymeren aus der Lösung und die Herstellung des Beschichtungspulvers erfolgte nach dem im Beispiel 1 beschriebenen Verfahren.

Mit den erhaltenen Beschichtungspulvern von der Korngröße zwischen 80 bis 200 μm (Durchmesser) wurden nach dem Wirbelsinterverfahren ca. 150 × 110 mm große und 2 mm starke, teflonisierte Kupferplatten mit glatter Oberfläche beschichtet, indem diese 7 Minuten auf 250 bis 300 °C vorgeheizt und dann 6 Sekunden in das Wirbelbett getaucht wurden. Aus den so erhaltenen, leicht abziehbaren Beschichtungen von ca. 500 μm Stärke werden (60 × 15 mm große Probekörper ausgestanzt und an diesen nach der DIN-Norm 53372 die Kältebruchwerte bei tiefen Temperaturen bestimmt. Die Ergebnisse sind in der beigefügten Tabelle zusammengestellt. In diese Tabelle wurden auch die am nicht modifizierten Produkt bestimmten Prüfergebnisse aufgenommen. Aufgeführt ist ferner auch das Aussehen der nach dem EPS-Verfahren erhaltenen Beschichtungen, zu deren Herstellung Kornfraktionen kleiner als 80 μ eingesetzt wurden, hinsichtlich ihrer Oberflächenbeschaffenheit.

Die Tabelle enthält ferner Angaben zu den Eigenschaften des nicht nach dem beschriebenen Verfahren modifizierten verseiften EVA-Copolymeren. Die angegebenen Werte zeigen die Wirkung des Modifizierungsmittels (starke Erniedrigung der Kältebruchtemperatur).

## Tabelle 1

Zusammensetzung und Eigenschaften der Beschichtungsmaterialien der Beispiele 2 bis 5

| Bei-spiel Nr. | Zugesetzter Modifikator Zusammensetzung des Copolymeren: Monomer I Chemische Bezeich-nung | Anteil (Gew.-%) | Monomer II Chemische Bezeich-nung | Anteil (Gew.-%) | Molekular-gewicht (dampfdruck-osometrisch bestimmt) | Modifikator-gehalt des Beschich-tungspulvers (Gew.-%) | Kältebruch-temperatur nach DIN 53372 (°C) | Beurteilung der Oberflächen-beschaffenheit der nach dem EPS-Verfahren hergestellten Beschichtungen Schichtdicke (μm) | Aussehen |
|---|---|---|---|---|---|---|---|---|---|
| 2 | 2-Ethyl hexyl-acrylat | 70 | Ethyl-acrylat | 30 | 12000 | 1,0 | −28 | ca. 100 | kraterfrei |
| 3 | " | " | " | " | " | 0,5 | −29 | 90 bis 110 | " |
| 4 | n-Butyl-acrylat | 75 | n-Butyl-methac-rylat | 25 | 15000 | 1,0 | −28 | 60 | " |
| 5 | n-Butyl-acrylat | 100 | | | 11000 | 0,5 | −24 | 150 | " |
| Ver-gleichs-beisp. | − | − | − | − | − | − | −15 | ca. 100 | viele Krater |

Beispiel 6

Auf einer Schneckenmaschine (ZSK 32 von Werner und Pfleiderer) werden pro Stunde eine Mischung aus 70 kg eines verseiften Ethylen-Vinylacetatcopolymerisates (Schmelzindex nach DIN 53735 bei 150 °C und 2,16 kg Belastung : 12,8 g/10 Min., Vinylacetatgehalt 2,4 Gew.-%, Vinylacetatgehalt im Ausgangspolymerisat 38,5 Gew.-%), 30 kg Titandioxid und 5 kg Poly-n-butylacrylat (Molekulargewicht 22 000) homogenisiert und der anfallende Schmelzenstrang granuliert. Das Granulat wird gemahlen. Für die Versuche eingesetzt wird nur die Kornfraktion < 100 µm.

Beispiel 7

10 Gew.-% des nach Beispiel 6 erhaltenen Pulvers < 100 µ werden abgemischt mit 90 Gew.-% eines Feinpulvers < 120 µ entsprechend dem in Beispiel 6 angegebenen Verfahrens ohne Zusatz von Acrylataddítiv. Der Auftrag auf eine Metallplatte erfolgt nach dem EPS-Verfahren mit einer Negativ-Pistole mit 30 kV und einer Aufschmelzeit von 10 Min. bei 200 °C. Die Beschichtung ist kraterfrei, die Oberfläche ist hart und glänzend, die nach DIN 53372 gemessene Kältebruchtemperatur beträgt — 32 °C. Ein ohne Acrylataddítiv hergestelltes Vergleichsmuster weist zahlreiche Krater und Unebenheiten in der Oberfläche auf, die gemessene Kältebruchtemperatur beträgt nur — 16 °C.

**Patentansprüche**

1. Polymermischungen, bestehend aus
   1) 99,95-80 Gew.-% verseiften Ethylen-Vinylacetat-Copolymeren in einem Molverhältnis von 2 : 1 bis 20 : 1 und einem Hydrolysegrad von 80 bis 100 % und
   2) 20-0,05 Gew.-% (Meth) Acrylsäurealkylester-homo- und Copolymerisaten mit $C_1$-$C_{24}$-Alkylresten in der Esterkomponente,
   wobei die Summe der Komponenten 1) und 2) 100 Gew.-% beträgt.

2. Verfahren zur Herstellung eines beschichteten Substrates, dadurch gekennzeichnet, daß das Substrat mit einer Polymermischung nach Anspruch 1 überzogen wird.

3. Verwendung von Polymermischungen nach Anspruch 1 zur Herstellung von Überzügen auf Formkörper.

**Claims**

1. Polymer mixtures consisting of
   1) 99.95-80 % by weight of saponified ethylene/vinyl acetate copolymers in a molar ratio of 2 : 1 to 20 : 1 and with a degree of hydrolysis of 80 to 100 % and
   2) 20-0.05 % by weight of (meth) acrylic acid alkyl ester homo- and copolymers having $C_1$-$C_{24}$-alkyl radicals in the ester component,
   the sum of components 1) and 2) being 100 % by weight.

2. Process for the production of a coated substrate, characterised in that the substrate is coated with a polymer mixture according to Claim 1.

3. Use of polymer mixtures according to Claim 1 for the production of coatings on shaped articles.

**Revendications**

1. Mélanges de polymères, consistant en
   1) 99,95-80 % en poids de copolymères saponifiés éthylène-acétate de vinyle dans un rapport molaire de 2 : 1 à 20 : 1 et avec un degré d'hydrolyse de 80 à 100 %, et en
   2) 20-0,05 % en poids d'homo- et copolymères d'esters alcoylés d'acide (méth) acrylique avec radicaux alcoyle en $C_1$-$C_{24}$ dans le composant ester,
   la somme des composants 1) et 2) s'élevant à 100 % en poids.

2. Procédé de fabrication d'un substrat enduit, caractérisé en ce qu'on revêt le substrat avec un mélange de polymères selon la revendication 1.

3. Utilisation de mélanges de polymères selon la revendication 1 pour la production de revêtements sur des corps moulés.